# EUROPEAN PATENT SPECIFICATION

(11) **EP 1 282 210 B1**
(45) Date of publication and mention of the grant of the patent: **09.09.2009**
(21) Application number: 02017026.2
(22) Date of filing: 29.07.2002
(51) Int. Cl.: H02G 1/04, B60M 1/28

(54) **Synchronization device for machines for laying cables, such as for example conductors, optical fibres, ropes or suchlike, and cable laying machine adopting said device**
Synchronisierungseinrichtung für Maschinen zum Verlegen von Kabeln, zum Beispiel Leitern, optischen Fasern, Seilen oder dergleichen und damit ausgerüstete Maschine
Dispositif de synchronisation pour machines de pose de câbles, par exemple conducteurs, fibres optiques, cordes ou similaires et machine de pose associée

(30) Priority: 30.07.2001 IT UD20010129
(43) Date of publication of application: 05.02.2003
(73) Proprietor: Tesmec SpA, 20123 Milano (IT)
(72) Inventor: Belluschi, Antonio, 24047 Treviglio (BG) (IT)
(74) Representative: Petraz, Gilberto Luigi

(56) References cited:
- EP-A- 0 972 669
- US-A- 5 048 797

## Description

### FIELD OF THE INVENTION

The present invention concerns a synchronization device used in machines for laying and stretching cables, such as for example electric conductors, ropes, optical fibres or suchlike, or for replacing them.

This device is applied in machines suitable to lay and stretch the cables of aerial electric lines, data distribution lines, railway lines or similar.

The device according to the present invention is applied in machines comprising pairs of driven capstans able to simultaneously feed respective cables, fibres, etc., and adjustment and synchronization means able to ensure that said cables are constantly aligned during the laying and stretching operations.

The present invention also concerns a laying machine adopting said device.

### BACKGROUND OF THE INVENTION

It is known that the operations to lay, stretch and/or replace electric cables, optical fibres, ropes or similar are usually performed using machines called winches, brakes or winch-brakes, comprising two or more combined pairs of driven capstans, made to rotate by respective hydraulic motors, so as to simultaneously lay two or more cables at once.

In a laying plant, the drawing machine (winch) determines the unwinding speed of the cables from the respective capstans, while the brake machine determines the tension thereof.

In order to lay the cables, drawing pilot ropes, or the electric cables which are already on the lines and have to be replaced, are normally used.

Due to operating necessities linked to the laying procedure, and to ensure an accurate and precise control during stretching, the cables which are fed simultaneously from several combined capstans of the drawing machine must have the front ends which maintain their starting alignment for the whole operation. In practice, however, it is difficult to maintain this alignment for various reasons: in fact, the cables can unwind from their respective capstans differently from each other; the capstans of the same winch can have respective different rotation speeds caused by the different hydraulic losses of the circuits which feed the hydraulic motors, or due to different mechanical friction relating to the line which is being stretched (pulleys, different heights, etc.).

In the state of the art, to solve this problem, the capstans are constrained mechanically to each other by means of at least a clamping pin, so as to oblige them to constantly maintain the same speed of rotation, hence theoretically ensuring that the cables being laid are aligned.

Although this solution partly solves the problem of alignment, it does however create other problems; for example, if it is necessary to stop one of the capstans, the operator is obliged to interrupt the drive to all the other capstans, to un-constrain the capstans, to solve the problem which has caused the stoppage, to re-align the cables, to mechanically constrain the capstans to each other again and to start laying again.

All these operations need a lot of time to carry out, and are necessary even for minimal interventions which take only a few minutes maintenance; this causes a considerable waste of time and hence of productivity in the laying operation.

Documents US-A-5,048,797 and EP-A-972.669 describe devices suitable to lay a single cable, with the cable remaining still and the laying machine moving. These documents refer to systems to synchronize the speed of the laying machine and the tension of the cable, but do not attempt to solve the problem of synchronizing the speeds of two or more cables laid simultaneously by laying machines which stay stationary with respect to the ground.

The Applicant has designed and embodied the present invention to overcome said shortcoming of the state of the art and to obtain further advantages.

### SUMMARY OF THE INVENTION

The present invention is set forth and charecterized in the main claims, while the dependent claims describe other innovative characteristics of the invention.

One purpose of the invention is to achieve a synchronization device for plants and machines for laying and stretching cables, such as for example electric conductors, optical fibres, ropes or similar, which will allow to keep the leading ends of said cables constantly aligned with each other, as they unwind simultaneously from several combined capstans, during the laying steps.

Another purpose is to achieve a device which will allow to operate individually on each of said cables, and on the relative capstans, without having to interrupt the functioning of the entire machine and hence of the other capstans.

The synchronization device according to the invention is applied in plants comprising laying machines, such as for example winches, brakes or winch-brakes, comprising two or more pairs of capstans able to stretch said cables.

The synchronization device according to the invention comprises means to automatically adjust the unwinding speed of each individual cable, able to keep the leading ends of the cables to be laid constantly aligned with each other.

The adjustment means comprise at least a position detection element associated with each capstan, and a control unit able to intervene, according to the signals arriving from said position detection elements, on the members which command and adjust the speed of rotation of the respective capstans.

According to a variant, a position detection element is associated with a pair of capstans driven by the same drive member.

In a preferential embodiment, this detection element comprises an encoder.

In another preferential embodiment, each encoder is associated with the toothed crown of a relative capstan.

The control unit, as we said, is able to receive the signals relating to the instantaneous angular position of each of the capstans, and hence to the speed of rotation thereof, and to compare them, therefore verifying if the speeds are substantially equal or if there are variations which might lead to a dis-alignment of the leading ends of the relative cables being unwound.

In a preferential embodiment, the control unit is able to fix the value of instantaneous speed of one of the capstans as a reference, and to compare the speed of rotation of the other capstans with said reference value. In the event that the control unit detects a difference in the speed of one and/or the other capstan, it is able to intervene on the drive members of said capstans to restore equal speed to all capstans.

With the synchronization device according to the present invention it is therefore possible to intervene on every individual capstan during the laying step of a relative cable, in order to restore respective equal unwinding speeds in a substantially instantaneous manner; moreover, the invention allows to interrupt the drive of a single capstan, or of a single pair, without necessarily having to interrupt the functioning of the machine.

### BRIEF DESCRIPTION OF THE DRAWINGS

These and other characteristics of the present invention will be apparent from the following description of a preferential form of embodiment, given as a non-restrictive example, with reference to the attached drawings wherein:
- Fig. 1 shows schematically a laying plant where the synchronization device according to the present invention is applied;

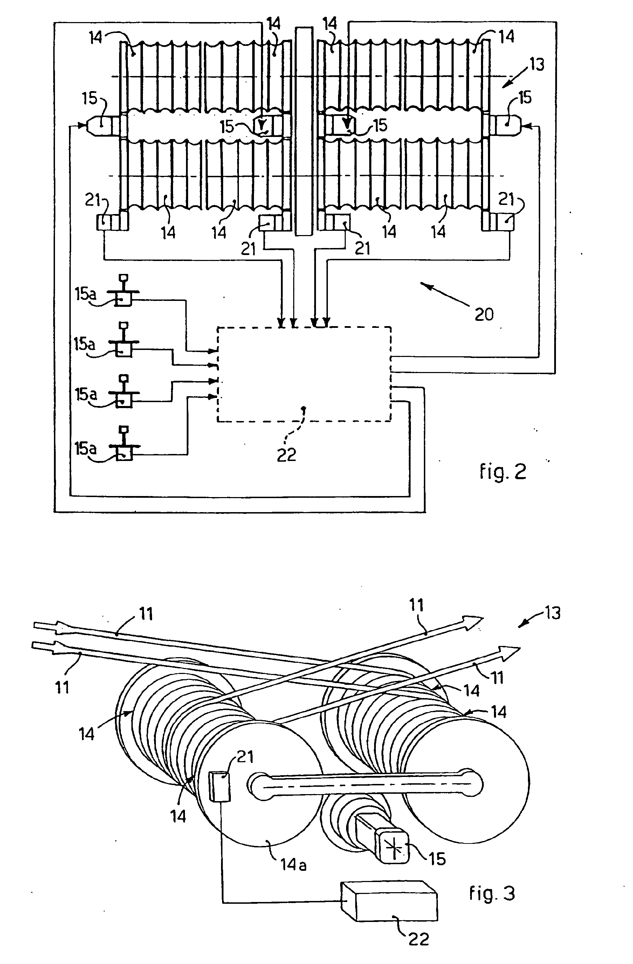

- Fig. 2 shows schematically the working principle of the control and adjustment means applied to four pairs of capstans;
- Fig. 3 is a three-dimensional view of an enlarged detail of Fig. 1.

### DETAILED DESCRIPTION OF A PREFERENTIAL FORM OF EMBODIMENT OF THE INVENTION

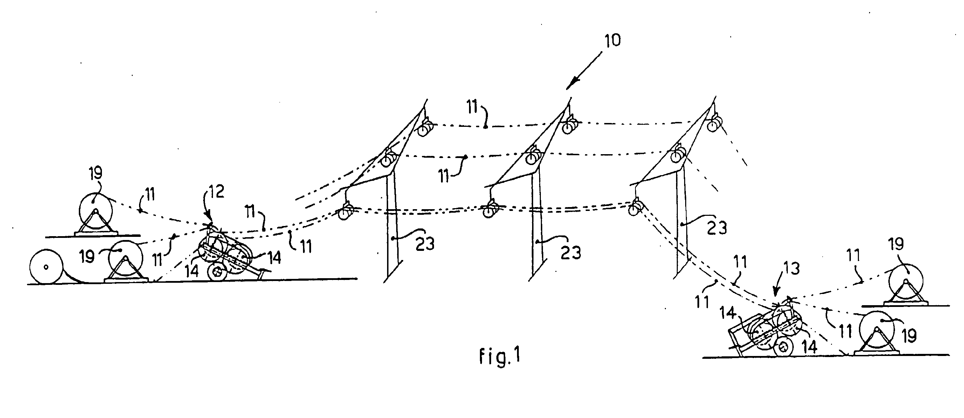

With reference to Fig. 1, a plant 10 for laying conductors 11, optical fibres, ropes or similar, according to the present invention, comprises a laying (braking) machine 12, a traction/collection machine (winch) 13 and a synchronization device 20.

The laying machine 12 and the traction/collection machine 13 in this case are of the combined type able to selectively perform both the function of a winch and the function of a brake, and are therefore equal.

Said machines 12, 13 in this case comprise four pairs of capstans 14, arranged axially one with respect to the other, two by two on two parallel axes; the conductors 11 to be laid are able to be wound and then unwound thereon. The conductors 11 are fed from reels 19 arranged upstream of the pairs of capstans 14. The capstans 14 are driven by respective hydraulic motors 15, commanded by relative pumps 15a.

It is obvious that the hydraulic motor 15 could also be electric, combustion or other types.

The synchronization device 20 is preferentially applied to the machine 13 which performs the function of traction/collection (winch).

Said device 20 comprises a plurality of position detection elements, for example of the encoder type 21, each one associated with a crown 14a of a relative capstan 14 for every pair, and able to detect the instantaneous angular position, and hence the speed of rotation, of every pair of capstans 14 driven by the same motor 15.

The synchronization device 20 also comprises a control unit 22, connected to the encoders 21 and able to compare, according to the signals supplied by the encoders 21, the speeds of rotation of all the pairs of capstans 14. The control unit 22 is connected at outlet, with a feedback ring, to the hydraulic circuits and feed means, for example the pump 15a, of the respective hydraulic motors 15.

The synchronization device 20 applied to the laying plant 10 as described heretofore is used as follows.

The conductors 11, fed from the reels 19, are wound according to known techniques onto the respective capstans 14, and their leading ends are connected to pilot ropes, or to the old conductors which have to be replaced, engaged on the traction winches 13.

When laying begins, said conductors 11 are levelled and stretched, making them pass through pulleys positioned at the ends of the supports of the pylons 23.

The conductors 11 are unwound by means of the rotation imparted by the hydraulic motors 15 to the capstans 14. Taking the first pair of capstans 14, for example, as a reference, the control unit 22 compares the unwinding speeds of the other pairs of capstans 14 and, if any inequalities are discovered, intervenes on the respective hydraulic motors 15 so that the speeds of the capstans 14 are equivalent, possibly with a pre-set margin of tolerance.

In this way it is therefore possible to keep, instantaneously, the unwinding speeds of all the capstans 14 the same, and hence to keep the leading ends of the relative conductors 11 being laid constantly aligned with each other.

Moreover, in the event of break-downs or malfunctions, the invention allows to intervene on every individual capstan 14 without necessarily having to interrupt the functioning of the entire plant 10, or at least, without having to re-align the conductors 11 after the maintenance intervention has been made, thus considerably reducing the times of the intervention.

It is clear, however, that modifications and/or additions of parts can be made to the device 20 as described heretofore, without departing from the scope of the claims of the present invention.

For example, according to a variant, the position detection element 21 could be associated directly with the conductor 11 being unwound from the relative capstan 14.

It is also clear that, although the present invention has been described with reference to specific examples, a skilled person in the art shall certainly be able to achieve many other equivalent forms of synchronization device for laying cables, such as for example electric conductors, optical fibres or similar, all of which shall come within the scope of the claims of the present invention.

## Claims

1. Synchronization device for machines (12, 13) for laying cables (11) such as electric conductors, optical fibres, ropes or suchlike said machines (12, 13) comprising laying means consisting of at least a pair of capstans (14) combined and associated with respective drive members (15), said capstans (14) being able to simultaneously lay at least two of said cables (11), **characterized in that** it comprises automatic adjustment means (20) able to adjust the speed of rotation of said capstans (14) so as to maintain the unwinding speed of said at least two cables (11) substantially equal while they are laid.

2. Device as in claim 1, **characterized in that** said automatic adjustment means (20) comprise position detection elements (21), each associated with one respective of said capstans (14), able to detect the instantaneous angular position thereof, and a control unit (22) able to receive signals from said position detection elements (21), and to adjust individually the drive of the relative motor members (15) in order to obtain substantially equal speeds of rotation of said capstans (14).

3. Device as in claim 2, **characterized in that** each of said position detection elements comprises an encoder (21).

4. Device as in claim 3, **characterized in that** said encoder (21) is able to cooperate with a crown (14a) of one respective of said capstans (14).

5. Device as in claim 2, **characterized in that** said control unit (22) is able to fix the speed of one of said capstans (14) as a reference speed, and to compare instantaneously the speeds of rotation of the other capstans (14) with said reference speed.

6. Machine for the laying of cables such as electric conductors, optical fibres, ropes or suchlike, comprising laying means consisting of at least a pair of capstans (14) combined and associated with respective drive members (15), said capstans (14) being able to simultaneously lay at least two of said cables (11), **characterized in that** it comprises a synchronization device (20) able to automatically adjust the speeds of rotation of said capstans (14) so as to maintain the unwinding speeds of said at least two cables (11) substantially equal.

7. Machine as in claim 6, **characterized in that** said synchronization device (20) comprises position detection elements (21) each associated with one respective of said captans (14), and a control unit (22) able to receive the position signals from said position detection elements (21), and to condition the drive of the relative motor members (15) in order to obtain substantially equal speeds of rotation of said capstans (14).

8. Machine as in claim 6 or 7, **characterized in that** every motor member comprises a hydraulic motor (15) fed by relative pump feed means (15a).

9. Machine as in claim 6 or 7, **characterized in that** every drive member (15) comprises an electric motor.

## Patentansprüche

1. Synchronisierungsvorrichtung für Maschinen (12, 13) zum Verlegen von Kabeln (11) wie elektrischen Leitern, Lichtwellenleitern, Seilen oder dergleichen, wobei die Maschinen (12, 13) Verlegungsmittel aufweisen, die aus mindestens einem Paar von Winden (14) bestehen, die mit jeweiligen Antriebsmitteln (15) kombiniert und assoziiert sind, wobei die Winden (14) zum gleichzeitigen Verlegen von mindestens zwei der Kabel (11) geeignet sind, **dadurch gekennzeichnet, dass** sie automatische Anpassungsmittel (20) aufweist, die zum Anpassen der Drehgeschwindigkeit der Winden (14) geeignet sind, so dass die Abspulgeschwindigkeit der mindestens zwei Kabel (11) während ihrer Verlegung im Wesentlichen gleich gehalten wird.

2. Vorrichtung gemäß Anspruch 1, **dadurch**
**gekennzeichnet, dass** die automatischen Anpassungsmittel (20) aufweisen: Positionsdetektionselemente (21), die jeweils mit einer jeweiligen der Winden (14) assoziiert sind, die zum Detektieren der momentanen Winkelposition derselben geeignet sind, und eine Steuereinheit (22), die zum Empfangen von Signalen von den Positionsdetektionselementen (21) und zum individuellen Anpassen des Antriebs der jeweiligen Motorelemente (15) geeignet ist zum Erhalten von im Wesentlichen gleichen Drehgeschwindigkeiten der Winden (14).

3. Vorrichtung gemäß Anspruch 2, **dadurch**
**gekennzeichnet, dass** jedes der Positionsdetektionselemente einen Codierer (21) aufweist.

4. Vorrichtung gemäß Anspruch 3, **dadurch**
**gekennzeichnet, dass** der Codierer (21) zum Zusammenwirken mit einem Kranz (14a) einer jeweiligen der Winden (14) geeignet ist.

5. Vorrichtung gemäß Anspruch 2, **dadurch**
**gekennzeichnet, dass** die Steuereinheit (22) zum Festlegen der Geschwindigkeit einer der Winden (14) als Referenzgeschwindigkeit und zum unmittelbaren Vergleichen der Drehgeschwindigkeiten der anderen Winden (14) mit der Referenzgeschwindigkeit geeignet ist.

6. Maschine zum Verlegen von Kabeln wie elektrischen Leitern, Lichtwellenleitern, Seilen oder dergleichen, aufweisend Verlegungsmittel bestehend aus mindestens einem Paar von Winden (14), die mit jeweiligen Antriebsmitteln (15) kombiniert und assoziiert sind, wobei die Winden (14) geeignet sind zum gleichzeitigen Verlegen von mindestens zwei der Kabel (11), **dadurch gekennzeichnet, dass** sie eine Synchronisierungsvorrichtung (20) aufweist, die zum automatischen Anpassen der Drehgeschwindigkeiten der Winden (14) geeignet ist, so dass die Abspulgeschwindigkeiten der mindestens zwei Kabel (11) im Wesentlichen gleich gehalten werden.

7. Maschine gemäß Anspruch 6, **dadurch gekennzeichnet, dass** die Synchronisierungsvorrichtung (20) aufweist: Positionsdetektionselemente (21), die jeweils mit einer jeweiligen der Winden (14) assoziiert sind, und eine Steuereinheit (22), die zum Empfangen der Positionssignale von den Positionsdetektionselementen (21) und zum Konditionieren des Antriebs der jeweiligen Motorelemente (15) zum Erhalten von im Wesentlichen gleichen Drehgeschwindigkeiten der Winden (14) geeignet ist.

8. Maschine gemäß Anspruch 6 oder 7, **dadurch gekennzeichnet, dass** jedes Motorelement einen Hydraulikmotor (15) aufweist, der von jeweiligen Pumpenzuführmitteln (15a) gespeist wird.

9. Maschine gemäß Anspruch 6 oder 7, **dadurch gekennzeichnet, dass** jedes Antriebsmittel (15) einen Elektromotor aufweist.

## Revendications

1. Dispositif de synchronisation destiné à des machines (12, 13) de pose de câbles (11), comme, par exemple, des conducteurs électriques, des fibres optiques, des cordes ou similaires ; lesdites machines (12, 13) comprenant des moyens de pose consistant en au moins une paire de cabestans (14) combinée et associée à des éléments d'entrainement respectifs (15), lesdits cabestans (14) étant aptes à poser simultanément au moins deux desdits câbles (11), **caractérisé en ce qu'**il comporte des moyens de réglage automatique (20) aptes à régler la vitesse de rotation desdits cabestans (14) de façon à maintenir la vitesse de déroulement desdits au moins deux câbles (11) sensiblement identique lors de la pose.

2. Dispositif selon la revendication 1, **caractérisé en ce que** lesdits moyens de réglage automatique (20) comprennent des éléments de détection de position (21), chacun étant associé à l'un desdits cabestans respectif (14), aptes à détecter la position angulaire instantanée de ces derniers, et une unité de commande (22) apte à recevoir des signaux en provenance desdits éléments de détection de position (21), et à régler de manière individuelle l'entrainement des éléments de moteur connexes (15) de manière à obtenir des vitesses de rotation sensiblement identiques desdits cabestans (14).

3. Dispositif selon la revendication 2, **caractérisé en ce que** chacun desdits éléments de détection de position comporte un encodeur (21).

4. Dispositif selon la revendication 3, **caractérisé en ce que** ledit encodeur (21) est apte à coopérer avec une couronne (14a) de l'un desdits cabestans respectif (14).

5. Dispositif selon la revendication 2, **caractérisé en ce que** ladite unité de commande (22) est apte à établir la vitesse desdits cabestans (14) en tant qu'une vitesse de référence, et à comparer instantanément les vitesses de rotation des autres cabestans (14) à ladite vitesse de référence.

6. Machine de pose de câbles comme, par exemple, des conducteurs électriques, des fibres optiques, des cordes ou similaires ; comprenant des moyens de pose consistant en au moins une paire de cabestans (14) combinée et associée à des éléments d'entrainement respectifs (15), lesdits cabestans (14) étant aptes à poser simultanément au moins deux desdits câbles (11), **caractérisée en ce qu'**elle comporte un dispositif de synchronisation (20) apte à régler automatiquement les vitesses de rotation desdits cabestans (14) de façon à maintenir les vitesses de déroulement desdits au moins deux câbles (11) sensiblement identiques.

7. Machine selon la revendication 6, **caractérisée en ce que** ledit dispositif de synchronisation (20) comprend des éléments de détection de position (21), chacun étant associé à l'un desdits cabestans respectif (14), et une unité de commande (22) apte à recevoir les signaux de position en provenance desdits éléments de détection de position (21), et a régler l'entrainement des éléments de moteur connexes (15) de manière à obtenir des vitesses de rotation sensiblement identiques desdits cabestans (14).

8. Machine selon la revendication 6 ou 7, **caractérisée en ce que** chaque élément de moteur comporte un moteur hydraulique (15) alimenté par des moyens d'alimentation de pompe connexes (15a).

9. Machine selon la revendication 6 ou 7, **caractérisée en ce que** chaque élément de moteur (15) comporte un moteur électrique.
